# EUROPEAN PATENT SPECIFICATION

(11) **EP 2 216 111 B1**
(45) Date of publication and mention of the grant of the patent: **22.04.2015**
(21) Application number: 08849931.4
(22) Date of filing: 10.10.2008
(51) Int. Cl.: B22D 11/115, H01F 5/00, H01F 7/20, H01F 13/00, H01F 27/30, F16D 121/20

(54) **ELECTROMAGNETIC COIL DEVICE FOR USE OF IN-MOLD MOLTEN STEEL CAPABLE OF SERVING BOTH AS ELECTROMAGNETIC STIR AND ELECTROMAGNETIC BRAKE**
ELEKTROMAGNETISCHE SPULENVORRICHTUNG FÜR STRANGGUSS-STAHLSCHMELZE ZUR VERWENDUNG ALS ELEKTROMAGNETISCHER RÜHRER SOWIE ELEKTROMAGNETISCHE BREMSE
DISPOSITIF À BOBINE ÉLECTROMAGNÉTIQUE POUR ACIER FONDU EN MOULE, AYANT À LA FOIS UN EFFET DE BRASSAGE ET DE FREIN ÉLECTROMAGNÉTIQUE

(30) Priority: 16.11.2007 JP 2007298486
(43) Date of publication of application: 11.08.2010
(73) Proprietor: Nippon Steel & Sumitomo Metal Corporation, Tokyo 100-8071 (JP)
(72) Inventor: OKADA, Nobuhiro, Osaka-shi Osaka 541-0041 (JP); TAKATANI, Kouji, Osaka-shi Osaka 541-0041 (JP); KAWAMOTO, Masayuki, Osaka-shi Osaka 541-0041 (JP)
(74) Representative: Jackson, Martin Peter
(86) International application number: PCT/JP2008/068487
(87) International publication number: WO 2009/063712

(56) References cited:
- JP-A- 2000 000 648
- JP-A- 2001 009 559
- JP-A- 2007 007 719

## Description

### TECHNICAL FIELD

The present invention relates to an electromagnetic coil system for in-mold molten steel that is capable of serving both as an electromagnetic stirrer and as an electromagnetic brake, for use in continuous casting of steel while controlling the flow of in-mold molten steel.

### BACKGROUND ART

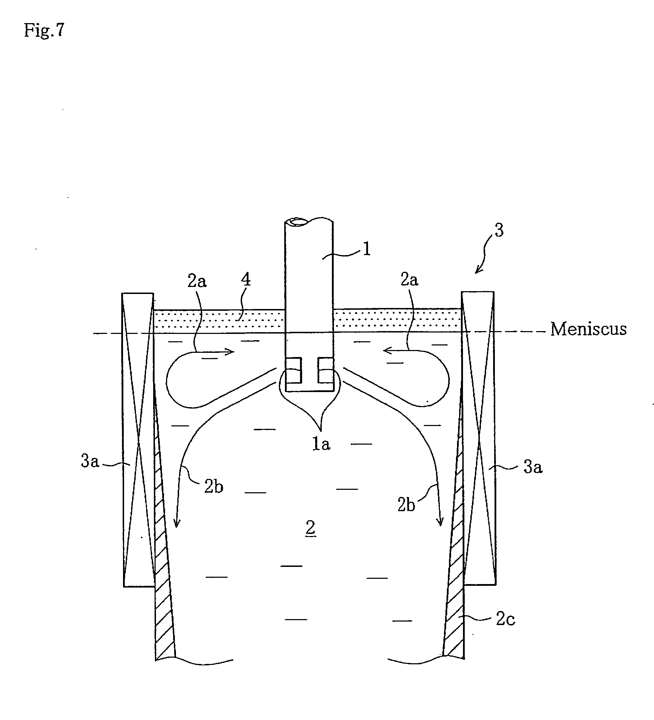

In typical continuous casting of steel, molten steel is injected into a mold using an immersion nozzle with two outlet ports. FIG. 7 is a schematic sectional view of a flow pattern of molten steel within a mold in this typical continuous casting. Molten steel 2, which is discharged from an outlet port 1a of an immersion nozzle 1, separates into an upward flow 2a and a downward flow 2b after colliding against a solidified shell 2c on a narrow side 3a of a mold 3. The upward flow 2a then forms a horizontal flow below the meniscus and moves in the direction of the immersion nozzle 1. Reference Numeral 4 in FIG. 7 shows a mold powder.

Controlling the flow of molten steel in the mold is of the utmost importance in the casting operation and in quality control of cast slabs. There are various methods for achieving flow control of molten steel, such as improving the shape of the immersion nozzle and applying an electromagnetic force to the molten steel in the mold. Of these methods, the application of an electromagnetic force to the molten steel in the mold has become widely used and is practiced by two main methods of: electromagnetic stirring, which involves stirring the molten steel by means of an electromagnetic force; and electromagnetic braking, which applies a braking force to the molten steel outlet flow.

Electromagnetic stirring is known to have the effect of improving product quality and is primarily used in the casting of high-grade materials. On the other hand, electromagnetic braking is used to prevent a reduction in product quality resulting from re-melting of a solidified shell when the outlet flow of the molten steel collides against a solidified shell on the narrow sides of the mold by applying a braking force to the molten steel outlet flow. Electromagnetic braking is also used to increase the casting velocity by controlling the flow velocity of the molten steel below the meniscus.

These electromagnetic brakes and electromagnetic stirrers are both provided with electromagnetic coils with windings around their magnetic cores disposed on the back side of the mold. A core often employs iron, which is a ferromagnetic material, and is referred to as an iron core. An electromagnetic steel plate is employed as a core in electromagnetic stirring, which uses alternating current in order to reduce core loss due to electromagnetic induction. Soft iron is often used in an electromagnetic brake.

These electromagnetic coil systems typically have only a single function of either an electromagnetic brake or an electromagnetic stirrer.

Accordingly, the present inventors previously developed an electromagnetic coil system capable of serving both as an electromagnetic stirrer and as an electromagnetic brake (referred to below as a multi-function coil). See Patent Reference 1, for example. Such multi-function coils also employ an electromagnetic steel plate as a core, in order to activate electromagnetic stirring functions.
Patent Reference 1: Japanese Patent Application Kokai Publication No. 2007-007719

The geometry of the multi-function coil of the present invention is basically identical to that disclosed in Patent Reference 1. The multi-function coil also employs an electromagnetic coil structure disclosed in Patent Reference 2.
Patent Reference 2: Japanese Patent Application Kokai Publication No. S60-044157

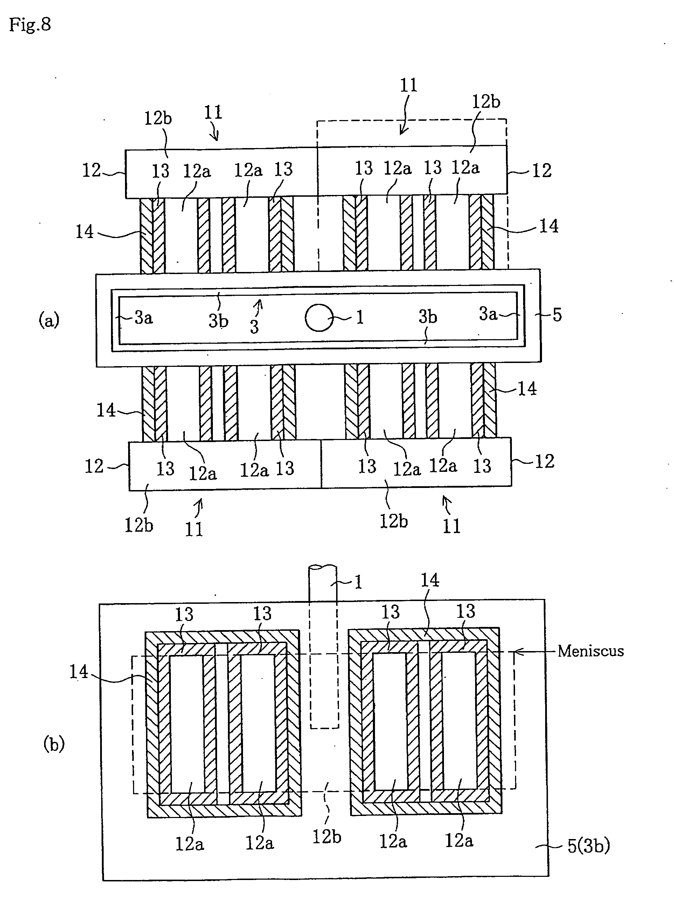

FIG. 8 shows a multi-function coil 11 as disclosed in Patent Reference 2 in which two coils 11 are arranged in a continuous manner on a wide side 3b of a mold 3. This multi-function coil 11 employs a winding 13 (inner winding) around every two teeth 12a, and a winding 14 (outer winding) around the outer side of the two teeth 12a to form a single unit. Since the shape of the two teeth 12a and the yoke 12b forming a core 12 of this electromagnetic coil resembles the Greek letter π (pi), this multi-function coil 11 is called a pi-coil.

### DISCLOSURE OF THE INVENTION

### PROBLEM TO BE SOLVED BY THE INVENTION

In continuous casting, since the mold is caused to oscillate, it is desirable that the electromagnetic coil system provided to the mold be as light in weight as possible. Reducing the size of the core is effective in reducing the weight of the electromagnetic coil system, but if the core is too small, it is no longer possible to ensure electromagnetic stirring performance or electromagnetic braking performance. Consequently, the dimensions of the various sites on the core are determined from this standpoint.

This approach to determining the dimensions of the various sites forming the core also applies to the multi-function coils or the pi-coils.

However, Japanese Patent Application No. 2007-150627, previously submitted by the applicant, disclosed only the width W of the teeth (120-170 mm) in the multi-function coils, or the pi-coils. Thus, nothing was disclosed relating to how to ensure the above-mentioned performance, if dimensions of certain sites were set at certain values.

The problem to be solved by the present invention is that in the multi-function coils disclosed previously by the applicant, it has not been resolved which parts of the core are to be specified at what dimensions, in order to ensure both electromagnetic stirring performance and electromagnetic braking performance.

### MEANS FOR SOLVING THESE PROBLEMS

The present invention is directed to a multi-function coil which is an electromagnetic coil system for in-mold molten steel serving both as an electromagnetic stirrer and as an electromagnetic brake for use in continuous casting of steel, by selectively applying electromagnetic stirring and electromagnetic braking on molten steel in a mold using a direct current or at least a 3-phase alternating current flowing through an electromagnetic coil disposed around a wide side of a mold, thereby ensuring both electromagnetic stirring performance and electromagnetic braking performance, while saving energy and reducing the weight of the core. The electromagnetic coil system comprises:
an electromagnetic coil and at least a 3-phase alternating current source and a direct current source,
the electromagnetic coil having with two teeth extending from a yoke, and
an inner winding disposed around the outer side of each of these two teeth and an outer winding disposed around the outside of the two teeth provided with these inner windings, thereby uniting the two teeth, and
wherein
   1) a length L of the teeth is specified to be at least twice the width W of the teeth, and/or
   2) a yoke thickness Y is specified to be at least twice the width W of the teeth,
   and further wherein n number of coils are disposed on each wide side of the mold, where n is a natural number greater than or equal to 2, and a core of a magnetic material formed from the yoke and the teeth is disposed in a range extending in a vertical direction from the position of the meniscus of the molten steel and including the outlet port of the immersion nozzle.

### ADVANTAGEOUS EFFECTS OF THE INVENTION

According to the present invention, it is possible to obtain a multi-function coil which ensures sufficient electromagnetic stirring capacity and electromagnetic braking capacity, while saving energy and reducing the weight of the core.

### BRIEF DESCRIPTION OF THE DRAWINGS

FIG. 1 shows a computation model of electromagnetic field analysis. FIG. 1 (a) is a perspective view of the entire model. FIG. 1 (b) is a horizontal sectional view. FIG. 1 (c) is a vertical sectional view.
FIG. 2 (a) and (b) are drawings showing the combinations of current phases of the multi-function coil disclosed in Japanese Patent Application No. 2007-150627.
FIG. 3 is a graph showing the relationship between the stirring force and the ratio of the length L to the width W of the teeth (the ratio L/W) during electromagnetic stirring.
FIG. 4 is a graph showing the flow velocity distribution in the direction of the wide side at the position A-A' in FIG. 5 at the meniscus (the position 5 mm from the wide side of the mold), when the ratio of the length L to the width W of the teeth (the ratio L/W) is 1.0, 2.0, and 3.0.
FIG. 5 is a diagram showing the comparative positions of flow velocity.
FIG. 6 is a graph showing the relationship between the magnetic flux density and the ratio of the yoke thickness Y to the width of the teeth W (Y/W) during electromagnetic braking, where the width of the teeth W is 120 mm, 140 mm, and 170 mm.
FIG. 7 is a vertical sectional view schematically showing a flow pattern of in-mold molten steel in conventional continuous casting.
FIG. 8 shows diagrams describing the geometry of the multi-function coil . FIG. 8 (a) is a horizontal sectional view, and FIG. 8 (b) is a vertical sectional view.

### BRIEF DESCRIPTION OF THE REFERENCE NUMERALS

- 1: Immersion nozzle
- 2: Molten steel
- 3: Mold
- 3a: Narrow side
- 3b: Wide side
- 11: Multi-function coil
- 12: Core
- 12a: Teeth
- 12b: Yoke
- 13: Inner winding
- 14: Outer winding
- 21: Core
- 21a: Teeth
- 21b: Yoke
- 22: Inner winding
- 23: Outer winding

### PREFERRED EMBODIMENTS

In the multi-function coil previously disclosed by the applicant for the purpose of ensuring both electromagnetic stirring performance and electromagnetic braking performance, a problem exists in that it was not resolved how to specify the dimensions of which parts of the core. The present invention makes it possible to ensure both electromagnetic stirring performance and electromagnetic braking performance by specifying optimal dimensions for the core.

### EMBODIMENTS

The present invention is described below, from the process of its initial conception to its solution of the problems of the prior art, and a preferred embodiment for implementing the present invention is described.

As described above, it is desirable that a multi-function coil have sufficient electromagnetic stirring performance and electromagnetic braking performance, while also being light-weight. Furthermore, although a large amount of electrical power is required to activate an electromagnetic stirrer or an electromagnetic brake, it is desirable to reduce an increase of electrical power as much as possible.

Accordingly, the present inventors sought a suitable core configuration which has sufficient electromagnetic stirring performance and electromagnetic braking performance that is light-weight and that makes it possible to save energy.

The performance of the multi-function coil includes the electromagnetic stirring capacity, which can be evaluated in terms of the stirring force resulting from the electromagnetic force generated in the molten steel. The performance also includes electromagnetic braking capacity, which can be evaluated in terms of the magnitude of the electromagnetic flux applied to the molten steel.

Therefore, the present inventors analyzed electromagnetic fields by numerical analysis and investigated changes of the stirring force and the magnetic flux density when changes were made in the core geometry of multi-function coils, in order to achieve sufficient electromagnetic stirring performance and electromagnetic braking performance, as well as to reduce weight and save energy.

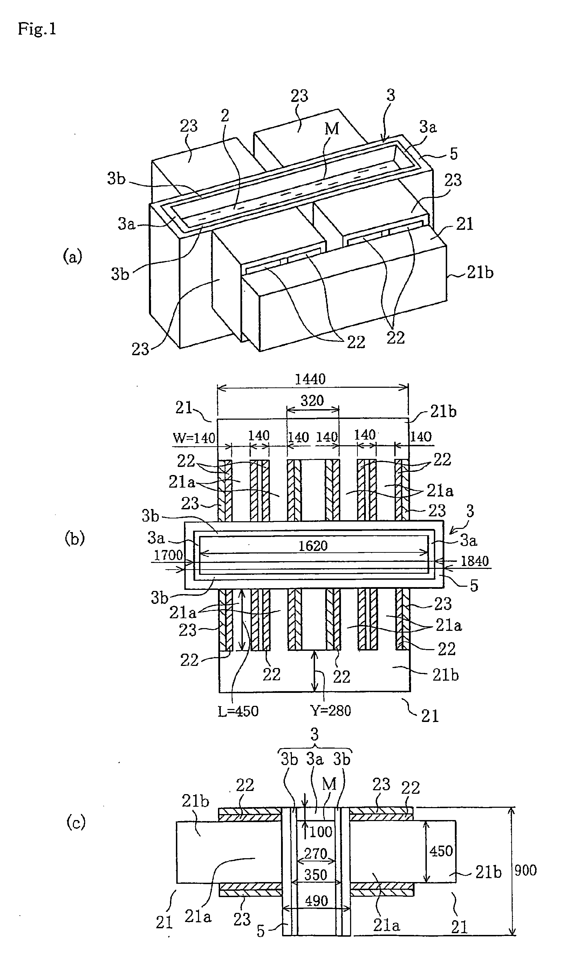

FIG. 1 shows a computation model of electromagnetic field analysis. FIG. 1 (a) is a perspective view showing the entire model. FIG. 1 (b) is a horizontal sectional view. FIG. 1 (c) is a vertical sectional view. The numerals in the figure represent the dimensions (mm) of the parts of the model.

A non-magnetic stainless steel back-up plate 5 is disposed on the outer side of a copper mold 3, and the upper end of a core 21 is at the same height as the meniscus M. An inner winding 22 and an outer winding 23 for the teeth 21a forming the core 21 each have a width of 50 mm. In FIG. 1, the Reference Numeral 21b is a yoke forming the core 21.

When activating electromagnetic stirring, alternating current is applied with a current value of 45000 ampere-turn (referred to below as AT), and a frequency of 4.0 Hz. When activating electromagnetic braking, direct current is applied with a current value of 54000 AT.

The coil current phases during electromagnetic stirring exhibit the same combinations of current phases as those disclosed in Japanese Patent Application No. 2007-150627.

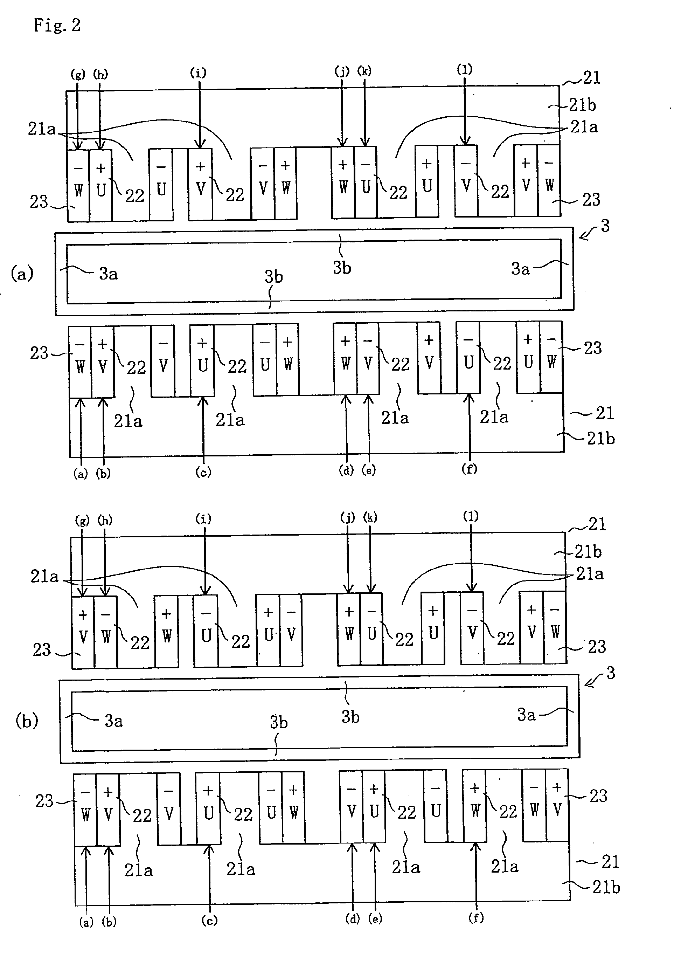

As shown in FIG. 2, excitation coils (a) - (c), excitation coils (d) - (f), excitation coils (g) - (i), and excitation coils (j) - (l) each form one electromagnetic coil. Excitation coils (a), (d), (g), and (j) are excitation coils which have the outer winding 23 to unify the two respective teeth 21a.

An electromagnetic coil having the excitation coils (a) - (c) and the excitation coils (d) - (f) arranged sequentially is disposed on one wide side 3b of the mold 3. An electromagnetic coil having the excitation coils (g) - (i) and the excitation coils (j) - (1) arranged on the other wide side 3b of the mold 3, is disposed facing the excitation coils (a) - (c) and the excitation coils (d) - (f).

In such an arrangement, phases U, V, and W having a phase difference of 120° in a 3-phase alternating current, are applied to the excitation coils (a) - (l) at the inner winding 22 for the teeth 21a of the electromagnetic coils, in the sequence of the excitation coils, as shown in FIG. 2. In FIG. 2 (a), -W, +V, +U, +W, -V, -U, -W, +U, +V, +W, -U, and -V are applied sequentially to the excitation coils (a) - (1). In FIG. 2 (b), -W, +V, +U, -V, +U, +W, +V, -W, -U, +W, -U, and -V are applied.

On the other hand, during electromagnetic braking, current is applied in the same direction to all three windings 22 and 23 around the two teeth 21a.

As a result of numerical analysis, it was found that the stirring force during electromagnetic stirring is greatly affected by the length L of the teeth 21a, and that the magnetic flux density is greatly affected by the yoke thickness Y during electromagnetic braking.

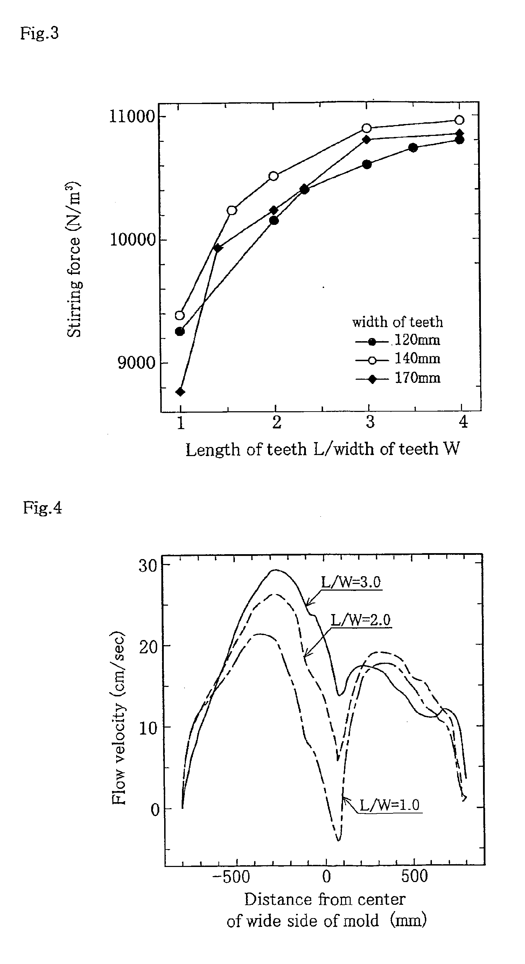

FIG. 3 shows the relationship between the stirring force and the ratio of the length L to the width W of the teeth (the ratio L/W) during electromagnetic stirring. Fig. 3 shows the maximum values of stirring force generated in the molten steel when the length L of the teeth is varied, in cases where the teeth width W is 120 mm, 140 mm, and 170 mm.

FIG. 3 indicates that in all cases of the teeth width W, the stirring force greatly increases when the ratio L/W increases by a factor of 1 to 2, and that when it increases by a factor of 3 and a factor of 4, the amount of increase becomes smaller. This indicates that from the standpoint of reducing the weight, the length L of the teeth is suitably 2-3 times the width W of the teeth.

FIG. 3 also indicates that when the width W of the teeth is 140 mm and the ratio L/W = 3, the stirring force is 10800 N/m³, which is 1.14 times 9400 N/m³, when L/W = 1. In other words, when L/W = 3, the same stirring force can be produced at 0.88 times the current value when L/W = 1, thereby saving energy.

Next, numerical analysis of the in-mold flow was performed when the width W of the teeth was 140 mm and the stirring force was greatest.

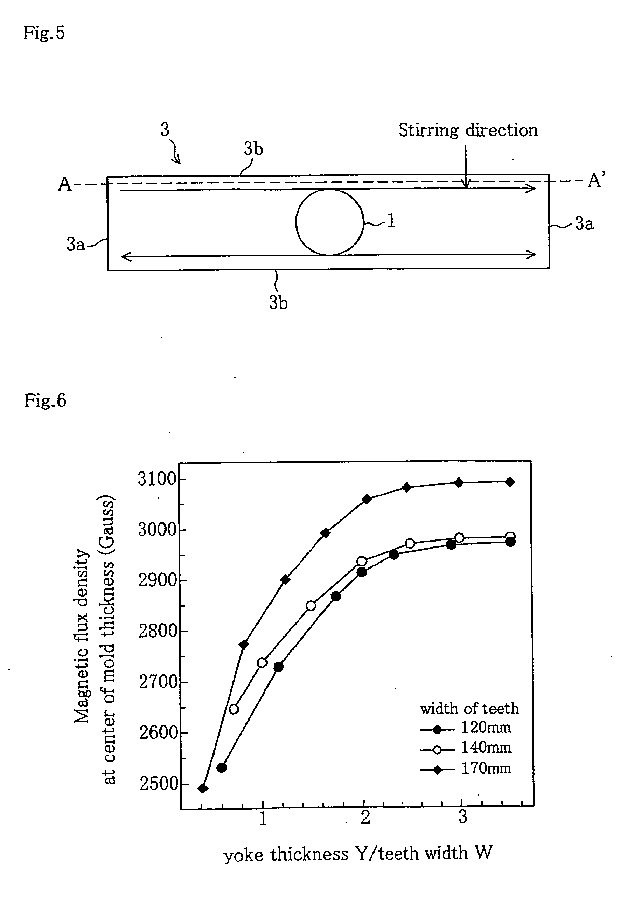

FIG. 4 shows the flow velocity distribution of molten steel when the ratio L/W is 1.0, 2.0, and 3.0. The flow velocity of molten steel shown in FIG. 4 is the flow velocity of molten steel in the direction of the wide side at the position A-A' in FIG. 5 at the meniscus, which is at a position 5 mm from the wide side of the mold.

FIG. 4 indicates that when L/W = 3.0, the flow velocity of molten steel is 10 cm/sec or greater in the same direction in all regions except for the corners of the mold. On the other hand, when L/W = 2.0, a flow velocity is produced in the same direction in all regions, even though the flow velocity of molten steel drops to 5 cm/sec at the center of the wide side of the mold.

However, when L/W = 1.0, the flow velocity of molten steel becomes reversed at the center of the wide side of the mold, since the stirring force is insufficient. This indicates that a ratio of L/W = 1.0 is not suited for electromagnetic stirring.

Based on the above findings, it is apparent that it is desirable for the length L of the teeth of the multi-function coil to be 2-3 times the width W of the teeth.

FIG. 6 is a graph showing the relationship between the magnetic flux density and the ratio of the yoke thickness Y to the width of the teeth W (referred to below as Y/W) during electromagnetic braking. FIG. 6 shows the maximum magnetic flux density at the center of mold thickness when the length L of the teeth varied, and where the width of the teeth W is 120 mm, 140 mm, and 170 mm.

FIG. 6 indicates that if Y/W is 3.0 or greater, then the magnetic flux density exhibits a constant value, and does not increase very much. On the other hand, if Y/W is lower than 2.0, the magnetic flux density is found to greatly decrease.

The above findings indicate that the yoke thickness Y should be twice the width W of the teeth, in order to achieve a lighter weight, while maintaining the electromagnetic braking performance of the multi-function coil. If there is some leeway with regard to weight, then it is desirable for Y/W to be 3.

The present invention was achieved on the basis of the above electromagnetic field analysis, and produces sufficient electromagnetic stirring performance, while reducing the weight and saving energy.

The present invention is an electromagnetic coil system for in-mold molten steel serving both as an electromagnetic stirrer and as an electromagnetic brake, for use in continuous casting of steel, by selectively applying electromagnetic stirring or electromagnetic braking on molten steel in a mold using a direct current or at least a 3-phase alternating current flowing through an electromagnetic coil disposed around a wide side of a mold, and employs an electromagnetic coil with the following structure.

Electromagnetic coils connected to a direct current source or to at least a 3-phase alternating current source are provided with 2 teeth extending from a yoke. An inner winding is provided around the outer side of each of these teeth, and there is further provided an outer winding around the outside of the two teeth provided with these inner windings, thereby uniting the teeth. Furthermore, the length L of these teeth is specified to be at least twice the width W of the teeth.

Moreover, in order to obtain sufficient electromagnetic braking performance, while reducing the weight of the coil and saving energy, the yoke thickness Y is specified to be at least twice the width W of the teeth of the electromagnetic coils.

An n number of such electromagnetic coils are arranged on each wide side, where n is a natural number greater than or equal to 2, and a core of a magnetic material formed from the yoke and the teeth is disposed in a range extending in a vertical direction from the position of the meniscus including the outlet port of the immersion nozzle.

In order to reduce the weight and save energy, as well as to obtain sufficient electromagnetic stirring performance and electromagnetic braking performance, the structure should be such that the length L of the teeth should be at least twice the width W of the teeth, and the yoke thickness Y should be at least twice the width W of the teeth.

The present invention is of course not limited to the foregoing examples, and the embodiments can of course be suitably modified, as long as they are within the scope of the technical ideas recited in the claims.

For example, the alternating current does not have to be 3-phase; as long as the current phase difference varies from 90° to 120°, it can be a multi-phase alternating current of a higher order.

### INDUSTRIAL APPLICABILITY

The present invention described above can be applied to continuous casting using a curved mold, a vertical mold, or any mold shape, as long as it involves continuous casting . Moreover, the present invention can be applied not only to continuous casting of slabs, but also to continuous casting of blooms.

## Claims

1. An electromagnetic coil system for in-mold molten steel (2) serving both as an electromagnetic stirrer and as an electromagnetic brake for use in continuous casting of steel by selectively applying electromagnetic stirring and electromagnetic braking on molten steel (2) in a mold (3) using a direct current or at least a 3-phase alternating current flowing through an electromagnetic coil disposed around a wide side of a mold (3), the electromagnetic coil system comprising:
an electromagnetic coil, and at least a 3-phase alternating current source and a direct current source,
the electromagnetic coil comprising two teeth (12a, 21a) extending from a yoke (12b, 21b), and
an inner winding (22) being disposed around an outer side of each of the two teeth (12a, 12b) and an outer winding (22) being disposed around the outside of the two teeth (12a, 21a) provided with the inner windings (22), thereby uniting the two teeth (12a, 21a),
wherein a length L of the teeth (12a, 21a) is at least twice a width W of the teeth (12a, 21a), and/or wherein a yoke (12b, 21b) thickness Y is at least twice a width W of the teeth (12a, 21a) and
wherein an n number of the electromagnetic coils are arranged on each wide side of a mold (3), where n is a natural number greater than or equal to 2, and a core (12) of a magnetic material formed from the yoke (12b, 21b) and the teeth (12a, 21a) is disposed in a range extending in a vertical direction from a position of a meniscus of molten steel and including an outlet port of an immersion nozzle (1).

2. The electromagnetic coil system of claim 1, wherein the yoke (12b, 21b) thickness Y is at least twice the width W of the teeth (12a, 21a).

3. The electromagnetic coil system of claim 1, wherein the length L of the teeth (12a, 21a) is at least twice the width W of the teeth (12a, 21a).

4. The electromagnetic coil system of claim 1, wherein the length L of the teeth (12a, 21 a) is at least twice the width W of the teeth (12a, 21 a), and the yoke (12b, 21b) thickness Y is at least twice the width W of the teeth (12a, 21a).

## Patentansprüche

1. Elektromagnetisches Spulensystem für in der Form geschmolzenen Stahl (2), das sowohl als elektromagnetischer Rührer als auch als elektromagnetische Bremse dient, zur Verwendung beim Strangguss von Stahl durch selektives Anwenden von elektromagnetischem Rühren und elektromagnetischem Bremsen auf geschmolzenen Stahl (2) in einer Form (3) unter Verwendung von Gleichstrom oder zumindest eines 3-phasigen Wechselstroms, der durch eine elektromagnetische Spule fließt, die um eine Breitseite einer Form (3) angeordnet ist, wobei das elektromagnetische Spulensystem umfasst:
eine elektromagnetische Spule und zumindest eine Quelle für 3-phasigen Wechselstrom und eine Quelle für Direktstrom,
wobei die elektromagnetische Spule zwei Zähne (12a, 21a) umfasst, die sich von einem Joch (12b, 21b) erstrecken, und
wobei eine Innenwicklung (22) um eine Außenseite jedes der zwei Zähne (12a, 12b) angeordnet ist und eine Außenwicklung (22) um die Außenseite der zwei Zähne (12a, 21a) angeordnet ist, die mit den Innenwicklungen (22) versehen sind, wodurch die zwei Zähne (12a, 21 a) vereint werden,
wobei eine Länge L der Zähne (12a, 21a) zumindest zweimal eine Breite W der Zähne (12a, 21a) ist und/oder wobei eine Dicke Y des Jochs (12b, 21b) zumindest zweimal eine Breite W der Zähne (12a, 21a) ist, und
wobei eine Anzahl n der elektromagnetischen Spulen auf jeder Breitseite einer Form (3) angeordnet ist, wobei n eine natürliche Zahl größer gleich 2 ist, und ein Kern (12) aus einem magnetischen Material, der durch das Joch (12b, 21b) und die Zähne (12a, 21a) gebildet ist, in einem Bereich angeordnet ist, der sich in vertikaler Richtung von einer Position eines Meniskus von geschmolzenen Stahl erstreckt und eine Austrittsöffnung eines Tauchrohrs (1) mit einschließt.

2. Elektromagnetisches Spulensystem nach Anspruch 1, wobei die Dicke Y des Jochs (12b, 21b) zumindest zweimal die Breite W der Zähne (12a, 21a) ist.

3. Elektromagnetisches Spulensystem nach Anspruch 1, wobei die Länge L der Zähne (12a, 21a) zumindest zweimal die Breite W der Zähne (12a, 21a) ist.

4. Elektromagnetisches Spulensystem nach Anspruch 1, wobei die Länge L der Zähne (12a, 21a) zumindest zweimal die Breite W der Zähne (12a, 21a) ist und die Dicke Y des Jochs (12b, 21b) zumindest zweimal die Breite W der Zähne (12a, 21a) ist.

## Revendications

1. Système de bobine magnétique pour acier fondu dans le moule (2) servant à la fois d'agitateur électromagnétique et de frein électromagnétique à utiliser dans le coulage en continu d'acier par application sélective d'une agitation électromagnétique et d'un freinage électromagnétique sur l'acier fondu (2) dans un moule (3) à l'aide d'un courant continu ou d'un courant alternatif au moins triphasé circulant à travers une bobine magnétique disposée autour d'un côté large d'un moule (3), le système de bobine magnétique comprenant :
une bobine magnétique et une source de courant alternatif au moins triphasé et une source de courant continu,
la bobine magnétique comprenant deux dents (12a, 21a) s'étendant depuis une culasse (12b, 21b), et
un enroulement interne (22) disposé atour d'un côté externe des deux dents (12a, 12b) et un enroulement externe (22) disposé atour de l'extérieur des deux dents (12a, 21a) munies des enroulements internes (22), unissant ainsi les deux dents (12a, 21a),
dans lequel une longueur L des dents (12a, 21a) est égale à au moins deux fois la largeur W des dents (12a, 21a), et/ou dans lequel une épaisseur Y de la culasse (12b, 21b) est égale à au moins deux fois la largeur W des dents (12a, 21a) et
dans lequel un nombre n des bobines magnétiques sont agencées sur chaque côté large d'un moule (3), n étant un nombre naturel supérieur ou égal à 2, et un noyau (12) d'un matériau magnétique formée à partir de la culasse (12b, 21b) et des dents (12a, 21a) est disposé dans une plage s'étendant dans une direction verticale à partir d'une position d'un ménisque d'acier fondu et incluant un orifice de sortie d'une buse d'immersion (1).

2. Système de bobine magnétique de la revendication 1, dans lequel l'épaisseur Y de la culasse (12b, 21b) est égale à au moins deux fois la largeur W des dents (12a, 21a).

3. J Système de bobine magnétique de la revendication 1, dans lequel la longueur L des dents (12a, 21a) est égale à au moins deux fois la largeur W des dents (12a, 21a).

4. Système de bobine magnétique de la revendication 1, dans lequel la longueur L des dents (12a, 21a) est égale à au moins deux fois la largeur W des dents (12a, 21a), et l'épaisseur Y de la culasse (12b, 21b) est égale à au moins deux fois la largeur W des dents (12a, 21a).
